# EUROPÄISCHE PATENTANMELDUNG

(11) **EP 0 579 197 A2**
(43) Veröffentlichungstag der Anmeldung: **19.01.1994**
(21) Anmeldenummer: 93111268.4
(22) Anmeldetag: 14.07.1993
(51) Int. Cl.: C08B 30/12, C08B 31/00

(54) **Stärkezwischenprodukt, Verfahren zu dessen Herstellung sowie Verfahren zu dessen Weiterverarbeitung**

(30) Priorität: 16.07.1992 DE 4223471
(71) Anmelder: EMS-INVENTA AG, CH-8001 Zürich (CH)
(72) Erfinder: Frische, Rainer, Dr., Frankfurt (DE); Best, Bernd, Mörfelden (DE); Schomann, Hermann, Langen (DE); Hoff, Heinz Georg, Dr., CH-7013 Domat/Ems (CH)
(74) Vertreter: Müller-Boré & Partner Patentanwälte

(57) **Zusammenfassung**

Die Erfindung betrifft ein Verfahren zur Herstellung eines Stärkezwischenprodukts, in dem die reaktionsfähigen Hydroxygruppen einer Stärke durch folgende Schritte aktiviert werden:
a) Quellung und Desintegration der Stärke mit verdünnter Aklalilauge
b) Fällung der desintegrierten Stärke aus wässrig-alkalischer Lösung durch Zugabe eines mit Wasser mischbaren Fällungsmittels
c) Abtrennung der gefällten, in hochaktivierter Form vorliegenden Stärke vom Filtrat unter Erhalt eines Stärkezwischenprodukts
d) Trocknung des Stärkezwischenprodukts
sowie das durch dieses Verfahren erhältliche Stärkezwischenprodukt, in dem die Stärke in einer lagerstabilen, hochaktivierten Form vorliegt. Die Erfindung betrifft weiterhin ein Verfahren zur Weiterverarbeitung dieses Stärkezwischenprodukts zu homogen derivatisierter Stärke sowie die Verwendung dieser homogen dirivatiserten Stärke zur Herstellung von Stärkewerkstoffen.

## Beschreibung

Die Erfindung betrifft den in den Patentansprüchen angegebenen Gegenstand. Insbesondere betrifft die Erfindung ein Verfahren zur Herstellung eines Stärkezwischenprodukts, durch das die reaktionsfähigen Hydroxygruppen einer Stärke aktiviert werden sowie das Stärkezwischenprodukt selber, in dem die Stärke in einer lagerstabilen, hochaktivierten Form vorliegt und durch das genannte Verfahren erhältlich ist. Desweiteren betrifft die Erfindung auch ein Verfahren zur Weiterverarbeitung des Stärkezwischenprodukts durch Umsetzung der hochaktivierten Stärke mit Modifizierungsmittel zu homogen derivatisierter Stärke, wobei diese homogen derivatisierte Stärke mit Additiven zu einem Stärkewerkstoff und dieser zu Formteilen oder Giessfolien weiterverarbeitet werden kann.

Aus den verschiedensten Gründen ist es erwünscht, Stärke und Amylose chemisch zu modifizieren, d.h. in Derivate zu überführen. Hierbei sind die hochderivatisierten Stärken bzw. Amylosen, die einen Substitutionsgrad von ca. 2 und grösser aufweisen für die Erzeugung von Produkten mit gegenüber von Stärke deutlich veränderten Eigenschaften besonders interessant. Bevorzugte Stärke- bzw. Amylosederivate sind Stärkeacyl- bzw. Amyloseacylverbindungen, insbesondere Stärkeacetat und Amyloseacetat.

Stärke und Amylose müssen gemäss Stand der Technik unter aggressiven Bedingungen derivatisiert werden. Eine entsprechende Vorschrift für die Herstellung von Stärke- und Amyloseacetaten findet sich im Houben-Weyl, Methoden der organischen Chemie, Teill III, 4. Auflage, Seite 2153ff. oder in der US-PS 3,549,619. Die dort angewandten aggressiven Bedingungen umfassen hohe Reaktionstemperaturen, konzentrierte Reagenzien wie Anhydride und Säuren sowie insbesondere Laugen, wie z.B. 50%-ige Natronlauge, zur Aktivierung der Stärke, und sehr lange Reaktionszeiten, wie 5 Stunden und länger für Substitutionsgrade von 2,5 und grösser. Als Folge davon resultieren Kettenspaltungs- und Zersetzungsreaktionen. Die Kettenlänge der resultierenden Stärke- bzw. Amyloseverbindung ist gegenüber dem Ausgangsmakromolekül Stärke bzw. Amylose erheblich reduziert. Werden anstelle der Laugen Amine eingesetzt, wie z.B. Pyridin, so sind diese nur äusserst schwer von den acylierten Produkten abzutrennen. Der charakteristische Geruch, welcher der chemischen Stoffklasse Amine zu eigen ist, fällt im acetylierten Produkt auch in geringen Verunreinigungsmengen unangenehm auf.

In allen Derivatisierungs- bzw. Acylierungsverfahren gemäss dem Stand der Technik erfolgen neben dem bereits erwähnten Kettenabbau auch Zersetzungsreaktionen, welche zu farbintensiven Begleitstoffen führen.

Die Abtrennung dieser farbintensiven Begleitstoffe vom erwünschten farblosen Stärke- bzw. Amyloseacylprodukt ist ausgesprochen schwierig, zum Teil nicht möglich.

Besonders bei der weitgehenden Acylierung von Amylose und amylosereichen Stärken gemäss den bekannten Verfahren, treten die beschriebenen Nachteile und Schwierigkeiten besonders stark hervor. Wegen der linearen Kettenstruktur der Amylose im Gegensatz zur verzweigten Kettenstruktur des Amylopektins, ist hier die Kettenspaltung während der Modifizierungsreaktion besonders ausgeprägt und insbesondere für die spätere Erzeugung von Werkstoffen von Nachteil.

Zudem erschwert die aus der linearen Kettenstruktur der Amylose resultierende Fähigkeit, polare und unpolare Substanzen zu komplexieren, die Abtrennung der unerwünschten Reaktionsnebenprodukte und damit die Gewinnung reiner Amylose- bzw. Hochamylosestärkeacylverbindungen.

Ein weiterer Nachteil des Stands der Technik ist, dass die Acylierung der einzelnen Moleküle nicht gleichmässig und gleichartig erfolgt, weil die festen Stärkepartikel von aussen nach innen derivatisiert werden. Die zuerst acylierten Makromoleküle sind somit den aggressiven Derivatisierungsbedingungen länger ausgesetzt als die zuletzt umgesetzten. Dies hat zur Folge, dass die zuerst acylierten Moleküle häufiger Kettenbrüche erleiden und auch höher derivatisiert sind, d.h. einen höheren Substitutionsgrad aufweisen, als die zuletzt umgesetzten Moleküle. Das resultierende derivatisierte Produkt besteht daher aus Acylverbindungen mit unterschiedlichen Substitutionsgraden, d.h. es liegt eine inhomogene Derivatisierung der Stärke bzw. der Amylose vor.

Es war daher Aufgabe der Erfindung, die Nachteile des oben genannten Stands der Technik zu überwinden und ein Verfahren zur Herstellung von homogen derivatisierter Stärke bzw. Amylose zur Verfügung zu stellen, wobei die ursprüngliche Kettenlänge der Makromoleküle weitgehend erhalten bleibt und die derivatisierten Produkte gegebenenfalls durch einfaches Umfällen in reiner Form erhalten werden können. Es war insbesondere Aufgabe der Erfindung, ein isolierbares und lagerstabiles, in hochaktivierter Form vorliegendes Stärkezwischenprodukt bereitzustellen, das mit Modifizierungmitteln zu homogenen Stärkederivaten umgesetzt werden kann, welche für unterschiedlichste Anwendungen geeignet sind, insbesondere zur Herstellung von Stärkewerkstoffen, aus denen bevorzugt Formteile und Folien hergestellt werden sollen.

Diese Aufgabe wird durch die Ansprüche 1, 8 und 9 gelöst. Die Unteransprüche beschreiben vorteilhafte Ausführungsformen der Erfindung.

Es wurde festgestellt, dass sich überraschenderweise jede Stärke mit verdünnter Alkalilauge aufschliessen und als Feststoff ausfällen lässt, wobei ein hochreaktives, isolierbares Stärkezwischenprodukt erhalten wird, dessen Aktivität im trockenen Zustand überraschenderweise über lange Zeit erhalten bleibt, so dass die Stärke in hochaktivierter Form gelagert und zu beliebigen Derivatisierungsprodukten weiterverarbeitet werden kann.

Im erfindungsgemässen Verfahren zur Herstellung eines Stärkezwischenprodukts werden die reaktionsfähigen Hydroxygruppen einer Stärke durch die folgende Schritte aktiviert:
a) Quellung und Desintegration der Stärke mit verdünnter Alkalilauge
b) Fällung der desintegrierten Stärke aus wässrig-alkalischer Lösung durch Zugabe eines mit Wasser mischbaren Fällungsmittels
c) Abtrennung der gefällten, in hochaktivierter Form vorliegenden Stärke vom Filtrat unter Erhalt eines Stärkezwischenprodukts
d) Trocknung des Stärkezwischenprodukts
Mit diesem erfindungsgemässen Aktivierungsverfahren kann jede Stärke zum erfindungsgemässen, hochaktivierten und lagerstabilen Stärkezwischenprodukt umgesetzt werden. Die eingesetzte Stärke besitzt einen Amylosegehalt von bis zu 100 Gew.-%, d.h. auch reine Amylose und Niedrigamylosestärketypen sind nach erfindungsgemässem Verfahren aktivierbar. In Hinblick auf spätere Anwendungen können Stärketypen mit Amylosegehalten von mindestens 50 Gew.-%, bevorzugt mindestens 70 Gew.-%, besonders bevorzugt mindestens 80 Gew.-% vorteilhaft sein.

Im Schritt a) wird die Stärke mit verdünnter, wässriger Alkalilauge, welche bevorzugt Natron- oder Kalilauge ist, und eine Konzentration von 0,5 bis 10 Gew.-%, bevorzugt 1 bis 5 Gew.-%, besonders bevorzugt 3 bis 4 Gew.-%, aufweist und in Mengen von 3 bis 20 Gew.-%, bevorzugt 10 bis 15 Gew.-%, bezogen auf die Menge an festem Alkalihydroxid zur Stärke, eingesetzt wird, bei Temperaturen von 20 bis 100°C, bevorzugt 30 bis 60°C, besonders bevorzugt bei 35 bis 45°C, während einer Zeitspanne von 0,5 bis 3 Stunden, bevorzugt 1 bis 2 Stunden, gequollen und desintegriert, wobei ein Stärkekleister in Form einer höher viskosen Lösung resultiert. Gemäss Schritt b) wird dann ohne zu neutralisieren aus dieser höher viskosen, wässrig-alkalischen Lösung die Stärke durch Zugabe eines mit Wasser mischbaren Fällungsmittels ausgefällt, wobei Alkohole bevorzugte und Methanol und Ethanol besonders bevorzugte Fällungsmittel sind. Auch geht hierbei praktisch die gesamte Alkalimenge mit in das Filtrat über. Die ausgefallene, in hochaktivierter Form vorliegenden Stärke wird dann gemäss Schritt c) vom Filtrat unter Erhalt eines Stärkezwischenprodukts abgetrennt, wobei alle Verunreinigungen im alkalischen Filtrat zurückbleiben; gegebenenfalls wird mit Fällungsmittel nachgewaschen oder durch einfaches Umfällen gereinigt.

Nach dem Trocknen gemäss Schritt d) liegt ein lagerstabiles Stärkezwischenprodukt vor, welches in vereinfachter Weise, insbesondere im wasserfreien bzw. nichtwässrigen Medium, zum gewünschten Derivat weiterverarbeitet werden kann.

Im Verfahren zur Weiterverarbeitung des isolierten Stärkezwischenprodukts wird die Stärke durch Umsetzung ihrer hochaktivierten Hydroxygruppen mit Modifizierungsmittel, welche aus der Gruppe der Ether-, Ester-, Urethan-, Carbamat- und/oder Acetalbildenden Stoffen ausgewählt ist, chemisch modifiziert, d.h. derivatisiert. Bevorzugte Modifizierung ist die Umsetzung mit Alkylenoxiden, insbesondere mit Ethylenoxid und/oder Propylenoxid. Eine weitere bevorzugte Derivatisierung ist die Reaktion mit organischen Säuren und/oder deren Derivaten, wie Carbonsäureanhydriden und Carbonsäurechloriden, wobei gesättigte aliphatische Carbonsäuren mit 1 bis 20 C-Atome bevorzugt sind. Besonders bevorzugt ist die Acylierung mit Essigsäure und/oder Palmitinsäure und/oder deren Derivaten.

Bei der Derivatisierung kann jeder beliebige Subtitutionsgrad bis zum Maximalwert von 3,0 erzielt werden. Für Derivate, die von Stärke abweichende Eigenschaften haben, sind Substitutionsgrade von 1,5 bis 3,0 bevorzugt, wobei solche mit Substitutionsgraden von 2,0 bis 3,0 besonders bevorzugt sind. Für Derivate, die stärkeähnlichen Charakter haben, sind dagegen Substitutionsgrade von 0,03 bis 0,45 bevorzugt und solche mit 0,20 bis 0,40 besonders bevorzugt.

Die erfindungsgemässen homogen derivatisierten Stärkeacylverbindungen eignen sich für die verschiedensten Anwendungen. Eine bevorzugte Verwendung ist die zur Herstellung von Stärkewerkstoffen. Dazu werden erfindungsgemässe Stärkederivate in bekannter Weise mit Weichmachern verarbeitet.

Als Weichmacher für z.B. Stärkeacetat können u.a. Diacetin, Triacetin und/oder Zitronensäureester, wie "Citroflex" eingesetzt werden. Für die Herstellung von Stärkewerkstoffen eignen sich insbesondere Stärkederivate mit einem Amylosegehalt von mindestens 50 Gew.-%, bevorzugt mindestens 70 Gew.-%, besonders bevorzugt mindestens 80 Gew.-% oder reine Amylosederivate.

Aufgrund ihrer besonderen Eigenschaften werden für die Herstellung von Stärkewerkstoffen erfindungsgemässe Stärkederivate bevorzugt, welche durch Modifizierung einer Mais- oder Erbsenstärke erhalten wurden.

Die aus den erfindungsgemässen Stärkederivaten hergestellten Stärkewerkstoffe werden insbesondere durch Pressen, Extrudieren oder Spritzgiessen zu Formteilen oder durch Giessen aus Lösung oder Dispersion zu Filmen oder Folien verarbeitet.

Eine bevorzugte Ausführungsform sind hierbei Blas- und Flachfolien.

Die erfindungsgemäss hergestellten homogenen Stärkeacylverbindungen zeigen im Vergleich zu denen, die gemäss dem Stand der Technik erhalten werden, deutlich veränderte Eigenschaften. So lösen sich erfindungsgemässe Acylverbindungen vollständig in den für sie geeigneten Lösungsmitteln, wie etwa Aceton, Chloroform und Essigester für Stärkeacylverbindungen mit hohem Substitutionsgrad, wobei je nach Konzentration mehr oder weniger hochviskose Flüssigkeiten entstehen. Dies tifft auch für Stärkeacylverbindungen mit Substitutionsgraden von deutlich kleiner 2,5 zu. Dagegen lösen sich Stärkeacylverbindungen, welche gemäss dem Stand der Technik hergestellt werden, selbst bei Substitutionsgraden von fast 3 nicht vollständig in Chloroform und Essigester. Vielmehr verbleiben deutlich erkennbare Trübungen. Je niedriger der Substitutionsgrad der gemäss dem Stand der Technik erzeugten Stärkeacylverbindungen ist, um so ausgeprägter sind diese Trübungen, wobei schon bei einem Substitutionsgrad von 2,5 wolkige Flockungen in den jeweiligen Lösungsmitteln erkennbar sind, nicht jedoch bei den erfindungsgemäss erzeugten.
Die erfindungsgemäss hergestellten Stärkeacylverbindungen zeigen somit bei gleichem Substitutionsgrad ein homogeneres Lösungsverhalten als solche, die nach dem Stand der Technik hergestellt sind.

Ebenso ist die Viskosität der gemäss dem Stand der Technik erzielten Stärkeacylverbindungen im Vergleich zu denen nach dem erfindungsgemässen Verfahren erzeugten Acylverbindungen selbst bei durchschnittlich gleichem Substitutionsgrad und gleichem Lösungsmittel-Feststoff-Verhältnis deutlich unterschiedlich.

Die in einem Lösungsmittel aufgelösten erfindungsgemässen Stärkeacylverbindungen zeigen ausgezeichnete Filmbildungseigenschaften. So besitzen Filme, die nach dem Giessverfahren aus erfindungsgemässen Stärkeverbindungen hergestellt wurden, brillante Transparenz. Vergleicht man diese Transparenz und Filmbildungseigenschaften mit Stärkeacylverbindungen, die gemäss dem Stand der Technik erzeugt wurden, so sind auch hier deutliche Unterschiede zu erkennen. Bekannte Acylverbindungen, insbesondere solche mit niedrigem Substitutionsgrad, weisen stets "Stippen" und Trübungen auf. Bei Stärkeacylverbindungen mit Substitutionsgraden kleiner 2,5, welche gemäss dem Stand der Technik hergestellt sind, lassen sich brillant transparente Filme nicht mehr erzeugen. Die nach dem erfindungsgemässen Verfahren hergestellten Stärkeacylverbindungen ergeben selbst bei kleinen Substitutionsgraden Filme mit brillanter Transparenz.

Erfindungsgemässe Produkte zeigen nicht nur Unterschiede in ihrer Löslichkeit, ihrem unterschiedlichen Filmbildungscharakter und im Verhalten der Filme, sondern auch bei den thermoplastisch verarbeiteten Stärkewerkstoff-Formmassen. So weichen die Reckfähigkeit, die Elastizität, die Knitterfestigkeit, der Glaspunkt u.a.m. von erfindungsgemässen Stärkeacylverbindungen, von solchen, die gemäss dem Stand der Technik hergestellt und analog verarbeitet wurden, ab.

Die Vorteile der Erfindung, insbesondere gegenüber dem Stand der Technik, sind:
a) es wird ein Stärkezwischenprodukt bereit gestellt, dessen Hydroxygruppen gleichmässig aktiviert sind und die ihre Aktivierung auch bei längerer Lagerung nicht verlieren
b) im Aktivierungsverfahren muss nur eine verdünnte Lauge eingesetzt werden, was umweltfreundlicher ist
c) im Aktivierungsverfahren genügen niedrige Temperaturen, was energie- und kostensparend ist
d) im Aktivierungsverfahren sind nur kurze Reaktionszeiten notwendig, was ebenfalls energie- und kostensparend ist
e) als Folge der äusserst milden Reaktionsbedingungen im Aktivierungsverfahren finden keine Kettenspaltungsreaktionen statt, d.h. die Kettenlänge der eingesetzten Stärke bzw. Amylose bleibt erhalten
f) als Folge der äusserst milden Reaktionsbedingungen im Aktivierungsverfahren entstehen keine oder wesentlich weniger Zersetzungsprodukte bzw. Verunreinigungen
g) Zersetzungsprodukte und Verunreinigungen verbleiben im Filtrat oder lassen sich durch einfaches Umfällen aus dem Produkt entfernen, wobei sich das Lösungs- bzw. Fällungsmittel durch Destillation zurückgewinnen lässt
h) aus dem hochaktivierten Stärkezwischenprodukt können bei wesentlich kürzeren Reaktionszeiten (erfindungsgemässe Derivatisierungsreaktion verläuft drei bis vier mal so schnell wie die gemäss dem Stand der Technik) und unter milden Reaktionsbedingungen Stärkederivate, insbesondere solche mit hohen Substitutionsgraden, erhalten werden, die nach dem Stand der Technik nicht zugänglich sind
i) die Ausbeute der Stärkederivate beträgt mehr als 90%, bezogen auf das eingesetzte in hochaktivierter Form vorliegende Stärkezwischenprodukt
j) die Derivatisierung des Stärkezwischenprodukts liefert sehr homogene Derivatisierungsprodukte mit neuen Eigenschaften, die nach dem Stand der Technik bisher nicht zugänglich sind
Die folgenden Beispiele erläutern die Erfindung, ohne sie zu beschränken.

### HERSTELLUNG VON ERFINDUNGSGEMÄSSEM STÄRKEZWISCHENPRODUKT

### Beispiel 1:

150 g Hylon VII (Maisstärke mit einem Amylosegehalt von ca. 70 Gew.-%) wurden in 500 ml Wasser suspendiert. Nach 30 Minuten Rühren wurde abgesaugt und in einem 2000 ml Rundkolben erneut in 500 ml Wasser angerührt. Danach wurden 15 g Natriumhydroxid, gelöst in 200 ml Wasser, zugegeben und 90 Minuten lang bei 40°C gehalten, wobei die Reaktionslösung gelb wurde. Der resultierende Stärkekleister besass in etwa die Viskosität von Honig.
Nach dem Abkühlen wurde die Stärke mit 300 ml Methanol ausgefällt. Nach Homogenisierung am Ultraturax wurde die ausgefällte Stärke abgesaugt und noch zweimal mit je 1000 ml Methanol am Ultraturax homogenisiert. Die abgesaugte Stärke wurde auf der Fritte mit 500 ml Methanol gewaschen. Trocknung des noch feuchten Produkts erfolgte ca. 1 Stunde lang am Vakuumrotationsverdampfer bei 40°C und 100 mbar. Nach Ausbreitung auf Filterpapier und Trocknen an der Luft über Nacht wurden 131,5 g pulvriges Stärkezwischenprodukt in hochaktivierter Form erhalten.

### Beispiel 2:

Aus 250 g Maisstärke mit einem Amylosegehalt von 85 Gew.-%, 800 ml Wasser und 25 g Natriumhydroxid, gelöst in 300 ml Wasser, sowie 3000 ml Methanol wurde analog Beispiel 1 ein Stärkezwischenprodukt in hochaktivierter Form hergestellt. Nach Trocknen im Vakuum-Exsikkator betrug die Ausbeute 267 g.

### Beispiel 3

1250 g Jetkocherlösung von Hylon VII (Emslandstärke, 20%ig) 25 g Natriumhydroxid, gelöst in 100 ml Wasser, wurden analog Beispiel 1 im Oelbad 60 Minuten lang bei 40°C gehalten. Danach erfolgte Fällung mit Methanol/Aceton. Es resultierten 284 g Stärkezwischenprodukt mit 11,5% Restfeuchte.

### WEITERVERARBEITUNG DES STÄRKEZWISCHENPRODUKTS

### Beispiel 4: Herstellung von Stärkeacetat mit Substitutionsgrad von ca. 2,5

Nachfolgende Acylierung wurde in einer Reaktionsapparatur bestehend aus einem 2000 ml-Dreihalskolben, KPG-Rührer, einem Rückflusskühler und einem Tropftrichter ausgeführt.

100 g Stärkezwischenprodukt aus Beispiel 1 wurden mit 326 ml Acetanhydrid 1 Stunde lang im Oelbad mit einer Temperatur von 140°C erwärmt (Innentemperatur ca. 120°C). Dabei entstand eine honigartige Masse mit seidigem Glanz. Danach wurden 45 ml vergälltes Ethanol langsam zugetropft. Nach 30 Minuten Rühren wurden 20 ml Ethanol abdestilliert. Nach Abkühlung auf 80°C wurden insgesamt 1500 ml Methanol zugegeben. Nach weiterem Abkühlen wurde abgesaugt, zweimal mit je 1000 ml Methanol angerührt und mit dem Ultraturax gemischt und anschliessend abgesaugt. Nach dem Waschen auf der Nutsche mit 500 ml Methanol wurde abgesaugt und das Stärkederivat an der Luft getrocknet. Es resultierten 140 g Stärkeacetat mit einem Substitutionsgrad von ca. 2,5 bis 2,56.

### Beispiel 5: Herstellung von Stärkeacetat mit einem Substitutionsgrad von ca. 2,8

Beispiel 4 wurde wiederholt, die Reaktionszeit betrug jedoch 3 Stunden anstelle von 1 Stunde. Es resultierten 132 g Stärkeacetat mit einem Substitutionsgrad von ca. 2,8 bis 2,84.

### Beispiel 6: Herstellung eines gemischten Stärkeesters aus Palmitinsäure und Acetanhydrid (DS ca. 2,6)

50 g Stärkezwischenprodukt aus Beispiel 1 wurden mit 165 ml Acetanhydrid unter Rühren am Rückfluss im Oelbad mit einer Temperatur von 140°C erwärmt. Nach 5 Minuten war die Mischung fast klar. Es wurden nun 13 g Palmitinsäure, gelöst in 20 ml Acetanhydrid, zugefügt. Nach 60 Minuten Reaktionszeit wurden 23 ml vergälltes Ethanol zugegeben. Nach weiteren 30 Minuten wurde mit insgesamt 500 ml Methanol gefällt, wobei das Produkt feinkörnig ausfiel. Nach dem zweimaligen Waschen mit je 500 ml Methanol wurde abgesaugt und das Stärkederivat an der Luft getrocknet. Es resultierten 77 g feinkörniges Pulver; der Substitutionsgrad betrug ca. 2.6 bis 2,62

### Beispiel 7: Herstellung von Stärkeacetat mit einem Substitutionsgrad von ca. 2,9

Aus 100 g Stärkezwischenprodukt aus Beispiel 2 wurden analog Beispiel 4 119 g Stärkeacetat mit einem Substitutionsgrad von ca. 2,85 bis 2,9 erhalten.

### Beispiel 8: Herstellung von Stärkeacetat mit einem Substitutionsgrad von ca. 3

50 g Stärkezwischenprodukt aus Beispiel 3 wurden mit 165 ml Acetanhydrid 105 Minuten lang im Oelbad von ca. 140°C gehalten. Analog Beispiel 4 erfolgte die Zugabe von 23 ml vergälltem Ethanol sowie von 500 ml Methanol nach Abkühlen auf ca. 96°C.
Nach Absaugen und zweimaligem Waschen mit je 250 ml Methanol und Luftrocknung wurden 66 g Stärkeacetat mit einem Substitutionsgrad von ca. 2,95 bis 3 erhalten.

### Beispiele 9 bis 11: Herstellung von Pressfolien

Je 3,5 g Stärkederivat aus den Beispielen 4 (Beispiel 9), 6 (Beispiel 10) und 7 (Beispiel 11) wurden mit je 1,5 g Triacetin gut durchmischt und 20 bis 30 Minuten stehen gelassen. Anschliessend wurden bei 150°C Folien gepresst. Pressbedingungen:
- Beispiel 9:: 5 t/mehrmals 30 Sekunden
- Beispiel 10:: 10 t/zweimal 60 Sekunden
- Beispiel 11:: 5 t/dreimal 30 Sekunden
Es wurden jeweils klare, transparente und biegsame Folien erhalten.

### Beispiele 12 und 13: Herstellung von Giessfolien

- Beispiel 12:: 7 g Stärkederivat von Beispiel 4 und 3 g Triacetin wurden in 110 g Chloroform unter Rühren bei 70°C am Rückfluss gelöst.
- Beispiel 13:: 3,5 g Stärkederivat von Beispiel 6 und 1,5 g Triacetin wurden in 55 g heissem Chloroform gelöst.

Aus diesen Lösungen wurden jeweils Giessfolien mit folgenden Eigenschaften hergestellt:
- Beispiel 12:: wasserklare, mässig spröde Folie
- Beispiel 13:: sehr klare, weiche und elastische Folie

### Beispiel 14: Herstellung von Blasfolien

Aus 3 kg Stärkeacetat von Beispiel 4 und 1,11 kg eines Weichmachersystems, welches aus 36,6 Gew.-% 'Citroflex', 36,6 Gew.-% Diacetin, 24,4 Gew.-% Monoacetin und 2,4 Gew.-% Glycerin bestand, wurde in einem Brabender-Einwellen-Extruder mit Strangdüse (19 mm, 25D) bei nachfolgenden Extrudereinstelldaten ein Stärkeacetet-Granulat hergestellt:

| | |
|---|---|
| Temperaturprofil: | 120 / 145 / 150 / 120°C |
| Drehzahl: | 40 min⁻¹ |

Aus diesem Stärkeacetat-Granulat wurden mit oben genanntem Brabender-Einwellen-Extruder und gleichem Temperaturprofil unter Verwendung eines Blasfolienkopfes bei einer Schneckendrehzahl von 25 min⁻¹ und einem Aufblasverhältnis von 2 ein stabiler Blasfolienschlauch extrudiert. Durch Variation der Abzugsgeschwindigkeit konnte die Dicke der Folien im Bereich zwischen 25 und 50 µm eingestellt werden. Die Stärkeacetatblasfolie war brillant transparent.

Mechanische Eigenschaften der Blasfolie nach ISO-Norm 1184:

| | |
|---|---|
| Zugfestigkeit: | 14 N/mm² |
| Reissfestigkeit: | 11 N/mm² |
| Reissdehnung: | 40 % |

### Beispiel 15: Herstellung von Flachfolien

Aus dem Stärkeacetat-Granulat von Beispiel 14 wurde mit einem Brabender-Extruder unter Verwendung einer Breitschlitzdrüse (135 mm) bei nachfolgenden Extrudereinstelldaten eine transparente Flachfolie extrudiert:

| | |
|---|---|
| Temperaturprofil: | 110 / 140 / 150 / 135°C |
| Drehzahl: | 40 min⁻¹ |

Durch Variation der Abzugsgeschwindigkeit konnte die Dicke der Folie im Bereich von 50 - 120 µm und die Breite der Folie im Bereich von 80 - 120 mm eingestellt werden.

Mechanische Eigenschaften der Flachfolie nach ISO-Norm 1184:

| | |
|---|---|
| Zugfestigkeit: | 14 N/mm² |
| Reissfestigkeit: | 11 N/mm² |
| Reissdehnung: | 40 % |

### Vergleichsbeispiel 1: Herstellung von Stärkeacetat aus jetgekochter Stärke

25 g jetgekochte Hylon VII-Stärke wurden mit 83 ml Acetanhydrid unter Rühren im Oelbad mit einer Temperatur von 140°C erwärmt und 5 Stunden bei dieser Temperatur gehalten, ohne dass eine Umsetzung erfolgte. Es trat keine Viskositätserhöhung ein, auch eine Auflösungsreaktion hat nicht stattgefunden. Es wurde abgesaugt, zweimal mit je 200 ml Methanol gewaschen und anschliessend an der Luft getrocknet. Ausbeute: 23 g

### Ergebnis des Vergleichsbeispiels 1:

Eine durch Jetkochen gequollene und desintegrierte Stärke befindet sich nicht in einem erfindungsgemäss aktivierten Zustand und lässt sich ohne einen erfindungsgemässen Aktivierungsschritt nicht zu Stärkederivaten weiterverarbeiten.

### Vergleichsbeispiel 2: Aktivierung mit anschliessender Neutralisation

Beispiel 1 wurde wiederholt. Allerdings wurde nach dem Abkühlen vor dem Fällen mit Methanol mit Schwefelsäure neutralisiert. Ausbeute an gefälltem Produkt: ca. 120 g.

Produkt aus Vergleichsbeispiel 2 wurde dann analog Beispiel 4 umgesetzt. Dabei fand keine Derivatisierungsreaktion statt.

### Ergebnis des Vergleichbeispiels 2:

Wird vor dem Ausfällen der Stärke in Schritt b) des erfindungsgemässen Aktivierungsverfahrens die alkalische Lösung neutralisiert, so sind die reaktionsfähigen Hydroxygruppen der Stärke nicht aktiviert für eine nachfolgende Derivatisierungsreaktion, d.h., das nach einem Neutralisationsschritt erhaltene "Zwischenprodukt" ist kein erfindungsgemässes in hochaktivierter Form vorliegendes Stärkezwischenprodukt.

## Patentansprüche

1. Verfahren zur Herstellung eines Stärkezwischenprodukts, wobei die reaktionsfähigen Hydroxygruppen einer Stärke durch folgende Schritte aktiviert werden:
a) Quellung und Desintegration der Stärke mit verdünnter Alkalilauge
b) Fällung der desintegrierten Stärke aus wässrigalkalischer Lösung durch Zugabe eines mit Wasser mischbaren Fällungsmittels
c) Abtrennung der gefällten, in hochaktivierter Form vorliegenden Stärke vom Filtrat unter Erhalt eines Stärkezwischenprodukts
d) Trocknung des Stärkezwischenprodukts

2. Verfahren gemäss Anspruch 1, wobei die Stärke einen Amylosegehalt von 0 bis 100 Gew.-%, bevorzugt mindestens 50 Gew.-%, besonders bevorzugt mindestens 70 Gew.-%, besitzt.

3. Verfahren gemäss den Ansprüchen 1 und 2, wobei die in Schritt a) verwendete verdünnte wässrige Alkalilauge eine Konzentration von 0,5 bis 10 Gew.-%, bevorzugt 1 bis 5 Gew.-%, besonders bevorzugt 3 bis 4 Gew.-% besitzt und in Mengen von 3 bis 20 Gew.-%, bevorzugt 5 bis 15 Gew.-%, besonders bevorzugt 10 bis 15 Gew.-%, bezogen auf die Menge an festem Alkalihydroxid zur Stärke, eingesetzt wird.

4. Verfahren gemäss den Ansprüchen 1 bis 3, wobei die im Schritt a) verwendete Alkalilauge Natron- oder Kalilauge ist.

5. Verfahren gemäss den Ansprüchen 1 bis 4, wobei Schritt a) bei Temperaturen von 20 bis 100°C, bevorzugt bei 30 bis 60°C, besonders bevorzugt bei 35 bis 45°C erfolgt.

6. Verfahren gemäss den Ansprüchen 1 bis 5, wobei Schritt a) während einer Zeitspanne von 0,5 bis 3 Stunden, bevorzugt 1 bis 2 Stunden erfolgt.

7. Verfahren gemäss den Ansprüchen 1 bis 6, wobei im Schritt b) als Fällungsmittel Alkohol, bevorzugt Methanol oder Ethanol verwendet wird.

8. Stärkezwischenprodukt, erhältlich nach dem Verfahren gemäss den Ansprüchen 1 bis 7, wobei die Stärke in einer lagerstabilen, hochaktivierten Form vorliegt.

9. Verfahren zur Weiterverarbeitung des Stärkezwischenprodukts gemäss Anspruch 8, wobei die Stärke durch Umsetzung ihrer hochaktivierten Hydroxygruppen mit Modifizierungsmittel ausgewählt aus der Gruppe der Ether-, Urethan-, Carbamat- und Acetal-bildenden Stoffen homogen derivatisiert wird.

10. Verfahren gemäss Anspruch 9, wobei die Modifizierungsmittel Alkylenoxide sind, bevorzugt Ethylenoxid und/oder Propylenoxid.

11. Verfahren gemäss Anspruch 9, wobei die Modifizierungsmittel organische Säuren und/oder deren Derivate, wie Carbonsäureanhydride und Carbonsäurechloride, sind, bevorzugt gesättigte aliphatische Carbonsäuren mit 1 bis 20 C-Atomen und/oder deren Derivate, besonders bevorzugt Essigsäure und/oder Palmitinsäure und/oder deren Derivate.

12. Verfahren gemäss den Ansprüchen 9 bis 11, wobei die homogen derivatisierte Stärke einen Substitutionsgrad von 0,01 bis 3,0, bevorzugt 1,5 bis 3,0, besonders bevorzugt 2,0 bis 3,0 besitzt.

13. Verwendung der gemäss den Ansprüchen 9 bis 12 erhältlichen homogen derivatisierten Stärke zur Herstellung von Stärkewerkstoffen wobei die Stärke mit Additiven, insbesondere Weichmacher, verarbeitet wird.

14. Verwendung gemäss Anspruch 13, wobei die homogen derivatisierte Stärke in Stärkewerkstoffen einen Aymlosegehalt von mindestens 50 Gew.-%, bevorzugt von mindestens 70 Gew.-%, besonders bevorzugt von mindestens 80 Gew.-% besitzt.

15. Verwendung gemäss den Ansprüchen 13 und 14, wobei die homogen derivatisierte Stärke in Stärkewerkstoffen durch Modifizierung einer Mais- oder Erbsenstärke erhalten wurde.

16. Verwendung gemäss den Ansprüchen 13 bis 15, wobei der Stärkewerkstoff durch Pressen, Extrudieren oder Spritzgiessen zu Formteilen thermoplastisch verarbeitet wird.

17. Verwendung gemäss den Ansprüchen 13 bis 15, wobei der Stärkewerkstoff durch Giessen aus Lösung oder Dispersion zu Filmen und Folien verarbeitet wird.
